Europäisches Patentamt

European Patent Office

Office européen des brevets

(19)

(11) Veröffentlichungsnummer: **0 069 863 B1**

(12) **EUROPÄISCHE PATENTSCHRIFT**

(45) Veröffentlichungstag der Patentschrift:
**20.03.85**

(51) Int. Cl.⁴: **H 04 N 5/04, H 04 N 3/27**

(21) Anmeldenummer: **82105050.7**

(22) Anmeldetag: **09.06.82**

(54) **Schaltungsanordnung zum Erzeugen eines Steuersignals für die Vertikalausgangsstufe in einem Fernsehempfänger.**

(30) Priorität: **11.07.81 DE 3127493**

(43) Veröffentlichungstag der Anmeldung:
**19.01.83 Patentblatt 83/3**

(45) Bekanntmachung des Hinweises auf die Patenterteilung:
**20.03.85 Patentblatt 85/12**

(84) Benannte Vertragsstaaten:
**BE FR GB IT LU NL**

(56) Entgegenhaltungen:
**DE - B - 2 533 599
US - A - 4 228 461**

(73) Patentinhaber: **Deutsche Thomson-Brandt GmbH,
Hermann-Schwer-Strasse 3,
D-7730 Villingen-Schwenningen (DE)**

(72) Erfinder: **Geiger, Erich, Ing.grad, Panoramablick 19,
D-7731 Unterkirnach (DE)**
Erfinder: **Hartmann, Uwe, Ing.grad, Tallardstrasse 15,
D-7730 Villingen-Schwenningen (DE)**
Erfinder: **Mai, Udo, Ing.grad, Mühleschweg 2,
D-7730 VS-Tannheim (DE)**

## Beschreibung

Die Erfindung betrifft eine Schaltungsanordnung gemäss dem Oberbegriff des Anspruchs 1.

Eine solche Schaltung ist aus der US-PS Nr. 4228461 bekannt. Sie dient zur weitgehend störungsfreien Synchronisierung von normgemässen und leicht davon abweichenden Vertikalsignalen.

Eine andere Schaltung zum Empfang nicht normgemässer externer Signale ohne Einbusse von Störunempfindlichkeit ist aus der DE-AS Nr. 2657940 bekannt.

Eine weitere Schaltungsanordnung ist bekannt (DE-OS Nr. 2355080), in welcher zwecks Störbefreiung eine Torschaltung vorgesehen ist, die nur während der Öffnung der Torschaltung Synchronimpulse durchlässt und die bei nicht normgerechten Fernsehsignalen auf die bekannte direkte Synchronisation eines Vertikalfrequenzoszillators umschaltet. Durch die Umschaltung ergibt sich jedoch der Nachteil, dass die Vertikalablenkung durch Störimpulse im falschen Moment getriggert werden kann. Während der Umschaltphase zur endgültigen direkten Synchronisation ergibt sich ausserdem ein mehrmaliges Durchlaufen des Bildes, was ebenfalls störend empfunden wird.

Keine dieser Schaltungen ist geeignet, unterschiedliche Normensignale zu erkennen und zu verarbeiten.

Der Erfindung liegt die Aufgabe zugrunde, die Schaltung der eingangs genannten Art so zu ändern, dass mit ihr Fernsehsignale unterschiedlicher Norm empfangen und verarbeitet werden können. Diese Aufgabe wird durch die im Anspruch 1 gekennzeichnete Schaltungsanordnung gelöst. Weitere vorteilhafte Ausgestaltungen der Erfindung sind in den Unteransprüchen angegeben.

*Beschreibung:*

Die Erfindung soll nachstehend an einem Ausführungsbeispiel mit Hilfe der Zeichnung näher erläutert werden.

Fig. 1 zeigt ein detailliertes Schaltbild am Beispiel für zwei verschiedene Vertikalfrequenzen 50 und 60 Hz,

Fig. 2 zeigt eine Schaltungseinzelheit der Fig. 1, und

Fig. 3 zeigt verschiedene Synchronisationszustände zur Erläuterung der Wirkungsweise der Schaltung nach Fig. 1.

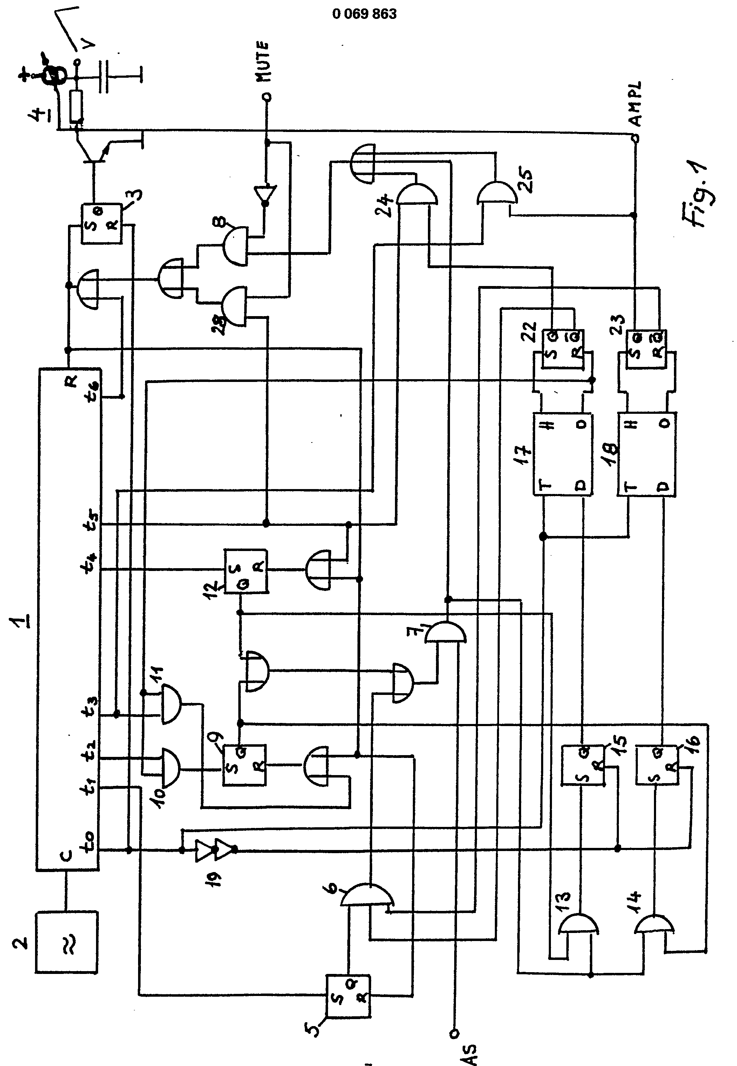

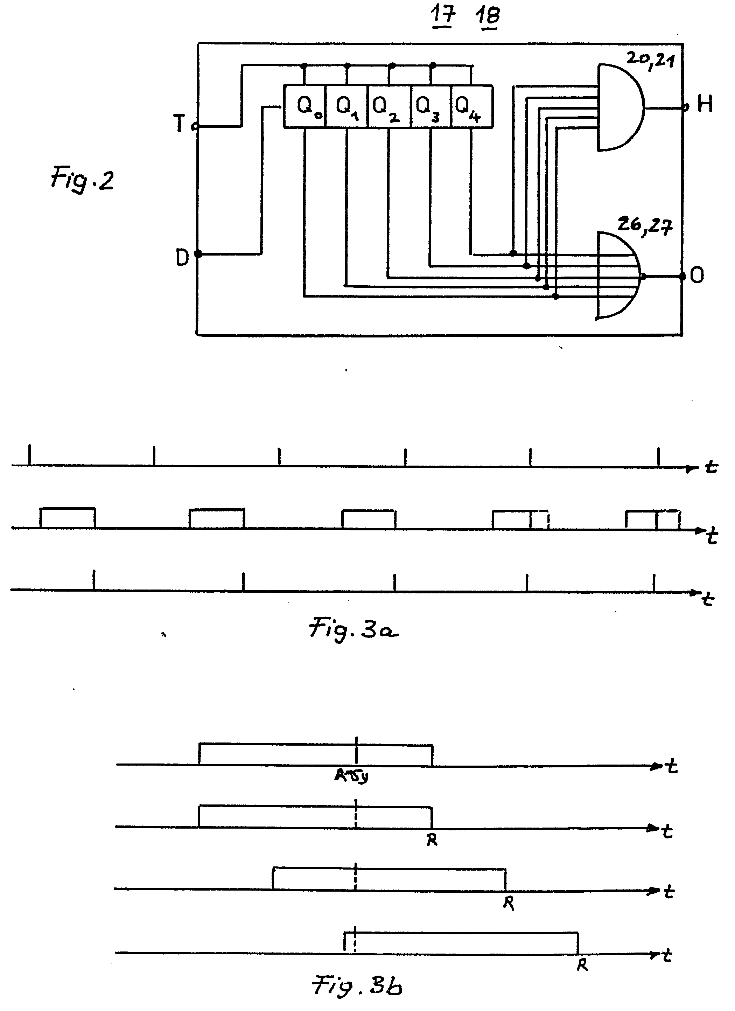

Mit Hilfe der Fig. 1 und 2 wird die grundsätzliche Wirkungsweise der Schaltungsanordnung beschrieben. Ein Digitalzähler 1, dessen Eingang C zeilenfrequente Impulse aus einem Generator 2 zugeführt werden, besitzt mehrere Impulsausgänge $t_0$ bis $t_6$, die zu unterschiedlichen Zeiten Tore öffnen zur Durchschaltung von dem Synchroneingang AS zugeführten Vertikalsynchronimpulsen aus dem Amplitudensieb.

Die Synchronimpulse haben bei einer Vertikalfrequenz von 60 Hz einen Abstand von 16,66 ms bzw. bei 50 Hz einen Abstand von 20 ms. Die Fenster liegen entsprechend: das 60-Hz-Fenster beginnt bei 16,19 ms und endet bei 16,88 ms, das 50-Hz-Fenster beginnt bei 19,52 ms und endet bei 20,22 ms. Realisiert werden die Fenster wieder durch bistabile Kippstufen, die durch entsprechende Impulse aus dem Teiler gesetzt bzw. zurückgesetzt werden. Für das 50-Hz-Fenster wird die bistabile Kippstufe 12 vom Zähler 1 direkt gesetzt und zurückgesetzt, während für das 60-Hz-Fenster eine bistabile Kippstufe 9 über ein Gatter 10 gesetzt und über ein Gatter 11 zurückgesetzt wird. Der Q-Ausgang der entsprechenden bistabilen Kippstufe 9 bzw. 12 ist während der Fensterdauer auf H-Pegel und öffnet eines der Gatter 13 bei 50 Hz bzw. 14 bei 60 Hz. Der weitere Ablauf wird anschliessend am Beispiel eines 50-Hz-Synchronsignals erklärt. Für 60 Hz gelten die in Klammern angegebenen Bezugszeichen.

Zu einem beliebigen Zeitpunkt während des grossen Fensters gelangt ein Synchronimpuls über das Gatter 7 und das Gatter 8 an den Reset-Eingang R des Zählers 1. Dieser beginnt beim Zählwert Null und öffnet nach 15,5 ms das grosse Fenster und damit das Gatter 7. Nach 19,52 ms (16,19 ms) wird die bistabile Kippstufe 12 (9) gesetzt und damit das Gatter 13 (14) geöffnet. Der bei 20 ms erscheinende Synchronimpuls kann nun über das Gatter 7 und das Gatter 8 zum Reset-Eingang R des Zählers 1 gelangen. Von dort erreicht das Signal über das Gatter 6 und das Gatter 12 (13) den Set-Eingang S der bistabilen Kippstufe 15 (16). Durch den Rücksetzimpuls, der zum Zähler 1 gelangt, werden gleichzeitig die bistabilen Kippstufen 5, 9 und 12 zurückgesetzt, die Fenster werden vorzeitig geschlossen und die Gatter 7, 13 und 14 gesperrt, so dass keine weiteren Impulse die Schaltung beeinflussen können. Auf diese Weise wird in der bistabilen Kippstufe 15 (16) eine Information gespeichert, die angibt, ob während der Zeitdauer des 50-Hz-Fensters (60-Hz-Fensters) ein Impuls vom Amplitudensieb abgegeben wurde oder nicht. Wenn ein Impuls vorhanden ist, liegt der Q-Ausgang der bistabilen Kippstufe 15 (16) auf H-Pegel. Dieser H-Pegel liegt am D-Eingang eines Schieberegisters 17 (18). Der durch den Synchronimpuls auf Null gesetzte Zähler 1 erzeugt nach 1,5 ms einen Taktimpuls, mit dem die am D-Eingang stehende Information in das Schieberegister 17 (18) gebracht wird. Über eine durch die Inverter 19 bedingte Zeitverzögerung wird die bistabile Kippstufe 15 (16) wieder zurückgesetzt. Hierdurch wird die Information in den bistabilen Kippstufen gelöscht. Sind sämtliche Speicher $Q_n$ des Schieberegisters 17 (18) gesetzt, so wird über ein Gatter 20 (21) (Ausgang H) die bistabile Kippstufe 22 (23) gesetzt. Der Q-Ausgang der entsprechenden Kippstufe erhält H-Pegel, der $\overline{Q}$-Ausgang erhält L-Pegel. Der L-Pegel am $\overline{Q}$-Ausgang sperrt das Gatter 6, wodurch das grosse Fenster gesperrt wird. Der H-Pegel am Q-Ausgang öffnet das Gatter 24 (25), wodurch das Gatter 7 von nun ab nur während der Zeitdauer des 50-Hz-Fensters (60-Hz-Fensters) geöffnet ist. Innerhalb dieser Zeit des 50-Hz-Fensters (60-Hz-Fensters) kann ein Synchronimpuls den Zähler 1 zurücksetzen. Durch das Umschalten auf das nunmehr schmalere Fenster wird eine grössere Störsicherheit erzielt.

Fehlt jedoch der Synchronimpuls, so wird der Zähler 1 über das Gatter 24 (25) nach etwa 20,22 ms ($t_6$) (16,88 ms) ($t_3$) zurückgesetzt. Die Öffnungszeit der Fenster ist so gewählt, dass sie z.B. 7,5 Zeilen vor dem Synchronimpuls öffnen und 3,5 Zeilen danach schliessen. Dadurch ist es möglich, dass nach zweimaligem Zurücksetzen mit der hinteren Fensterflanke, d.h. nach zweimaligem Fehlen des Synchronimpulses, der dritte Impuls noch in das Fenster fällt und ein Zurücksetzen des Zählers zum richtigen Zeitpunkt bewirkt. Dieser Fall ist in Fig. 3 dargestellt.

Fehlt der Synchronimpuls über einen längeren Zeitraum, z.B. bei Senderwechsel, so werden die Speicherplätze $Q_n$ des Schieberegisters 17 (18) mit 0 gefüllt und das NOR-Gatter 26 (27) bewirkt H-Pegel am Ausgang O. Dadurch wird die bistabile Kippstufe 22 (23) zurückgesetzt und das grosse Fenster geöffnet. Der Suchvorgang beginnt von neuem.

Zur Vermeidung von Störungen wird das 60-Hz-Fenster nur dann geöffnet, wenn im 50-Hz-Schieberegister keine Information gespeichert ist. Das Sperren erfolgt über die Gatter 10 und 11. Auf diese Weise kann ein offenes 60-Hz-Fenster keine Fehlsynchronisation bei Störungen hervorrufen.

Bei nichtvorhandenem Fernsehsignal, z.B. bei Empfang von Sendersignalen im Band II, gibt die im Fernsehempfänger vorgesehene Mute-Schaltung (nicht dargestellt) eine entsprechende Information. In diesem Fall wird auf eine Festfrequenz von z.B. 20,22 ms geschaltet. Diese Umschaltung geschieht über die Gatter 8 und 28. Dadurch wird gewährleistet, dass vorhandene Bildschirmeinblendungen, wie z.B. Kanalzahl und Uhrzeit, in ihrer Lage stabil bleiben.

Durch das zwangsweise Zurücksetzen des Zählers 1 nach 24 ms wird zur Ansteuerung der Vertikalendstufe kein gesonderter Vertikaloszillator mehr benötigt.

Mit der soeben beschriebenen Schaltung zur Erzeugung des Steuersignals für die Vertikalausgangsstufe lassen sich Vertikalsynchronimpulse beliebiger Länge z.B. für Dunkeltastungen gewinnen, indem z.B. die bistabile Kippstufe 3 mit einem Reset-Impuls gesetzt und mit einem Impuls, der nach der gewünschten Zeit vom Zähler erzeugt wird, zurückgesetzt wird.

Ein besonderes Merkmal der Schaltung ist, dass sie eine Information darüber gibt, ob ein 50- oder 60-Hz-Signal empfangen wird. Mit dieser Information am Ausgang AMPL kann z.B. die Vertikalamplitude umgeschaltet werden, so dass ein automatischer Mehrnormenempfang möglich ist. Die Amplitudenkonstanthaltung kann z.B. durch Umschalten des Konstantstromes in der Stufe 4 erfolgen.

Zusammenfassend ist zu sagen, dass die Vorteile der oben beschriebenen Schaltungsanordnung darin liegen, dass durch deren Wirkungsweise eine Standbildwiedergabe von VCR-Signalen bei 50 und 60 Hz möglich ist. Bei Fehlen von Synchronimpulsen wird mit dem Schliessen des Fensters ein Impuls erzeugt, wobei die Sägezahnspannung zur Ansteuerung der Vertikalendstufe auf Null geschaltet wird. Anderenfalls würde die Endstufe überlastet. Es sind mehrere Zeitfenster vorhanden zum Empfang von verschiedenen Normen der Vertikalablenkfrequenz. Die Vertikalablenkamplitude wird in Abhängigkeit von der Ablenkfrequenz automatisch konstant gehalten. Da die Schaltung verschiedene Zeitfenster für die verschiedenen Ablenkfrequenzen bildet, ist ein auf doppelter Zeilenfrequenz arbeitender Generator nicht notwendig. Die doppelte Zeilenfrequenz war bisher wegen des Zeilensprungs erforderlich. Die beschriebene Schaltung benötigt keinen Vertikalfrequenzoszillator. Mit den erzeugten Impulsen kann die Endstufe direkt angesteuert werden.

## Patentansprüche

1. Schaltungsanordnung zum Erzeugen eines Steuersignals für die Vertikalausgangsstufe (4) in einem Fernsehempfänger, mit Hilfe eines von einer Konstantstromquelle aufladbaren Kondensators mit einem Zähler (1), dessen Eingang (C) eine zur Zeilenfrequenz synchrone Frequenz zugeführt wird, sowie mit einem Amplitudensieb, welchem vertikalfrequente Impulse entnehmbar sind, wobei an die Zählerausgänge ($t_0$-$t_6$) Torschaltungen zur Bildung von Zeitfenstern unterschiedlicher Breite angeschlossen sind und während des Synchronisiervorgangs zunächst ein grosses Zeitfenster geöffnet wird und im stationären, synchronisierten Zustand auf ein kleineres Zeitfenster umgeschaltet wird, wobei das Umschalten auf das kleinere Zeitfenster nach mehrmaligem Aufeinanderfolgen und das Rückschalten auf das grosse Zeitfenster nach mehrmaligem aufeinanderfolgenden Fehlen von Vertikalsynchronisierimpulsen erfolgt, und die Rückflanke eines Zeitfensters bei Fehlen eines Vertikalsynchronisierimpulses den Zähler (1) auf Null zurücksetzt, und bei Vorhandensein eines Vertikalsynchronisierimpulses dieser den Zähler (1) auf Null zurücksetzt, dadurch gekennzeichnet, dass für verschiedene Normen der Ablenkfrequenz innerhalb des grosses Zeitfensters je ein kleineres Zeitfenster vorgesehen ist, und dass vom grossen Zeitfenster auf das der empfangenen Norm entsprechende kleinere Zeitfenster umgeschaltet wird, indem das mehrmalige Auftreten von Vertikalsynchronisierimpulsen innerhalb dieses bestimmten kleineren Zeitfensters festgestellt wird, dass bei mehrmaligem aufeinanderfolgenden Fehlen von Vertikalsynchronisierimpulsen innerhalb dieses bestimmten kleineren Zeitfensters auf das grosse Zeitfenster umgeschaltet wird, und dass in Abhängigkeit von dem gerade eingestellten Zeitfenster ein Signal abgeleitet wird, welches zur Konstanthaltung der Ablenkamplitude dient.

2. Schaltungsanordnung nach Anspruch 1, dadurch gekennzeichnet, dass das gewonnene Signal zur Konstanthaltung der Ablenkamplitude für weitere normenbedingte Umschaltungen des Fernsehempfängers verfügbar ist.

3. Schaltungsanordnung nach Anspruch 1, dadurch gekennzeichnet, dass die von dem Zähler (1) erzeugten kleinen Zeitfenster in bezug auf die Lage der Synchronimpulse unsymmetrisch erzeugt sind.

4. Schaltungsanordnung nach Anspruch 1, dadurch gekennzeichnet, dass bei Abwesenheit von Fernsehsignalen durch das im Fernsehempfänger erzeugte Mute-Signal der Zähler (1) auf eine konstante feste Ausgangsfrequenz geschaltet wird.

5. Schaltungsanordnung nach Anspruch 1, dadurch gekennzeichnet, dass die Zählereingangsfrequenz die Zeilenfrequenz ist.

6. Schaltungsanordnung nach Anspruch 1, dadurch gekennzeichnet, dass das gewonnene Signal den Konstantstrom der Konstantstromquelle umschaltet.

## Revendications

1. Montage pour produire un signal de commande pour l'étage de sortie de déviation verticale ou de trame (4) d'un récepteur de télévision, à l'aide d'un condensateur pouvant être chargé par une source de courant constant, le montage comportant un compteur (1), à l'entrée (C) duquel est appliquée (2) une fréquence synchronisée à la fréquence de lignes, ainsi qu'un filtre d'amplitudes à la sortie duquel peuvent être prélevées des impulsions à la fréquence verticale ou de trame, des sorties $(t_0\text{-}t_6)$ du compteur étant connectées à des portes pour former des fenêtres de temps ayant des largeurs différentes, une grande fenêtre de temps s'ouvrant d'abord pendant la procédure de synchronisation qui, dans l'état synchronisé stationnaire, est commutée sur une fenêtre plus petite, puis que la commutation sur la petite fenêtre s'effectue après des successions répétées de plusieurs impulsions de synchronisation verticale, après une absence répétée, le flanc arrière d'une fenêtre de temps remettant le compteur (1) à zéro en cas d'absence d'une série d'impulsions de synchronisation verticale, tandis que, en présence d'une impulsion de synchronisation verticale, cette dernière remet le compteur (1) à zéro, caractérisé en ce que, pour des fréquences de déviation correspondant à différentes normes, il est prévu, à l'intérieur de la grande fenêtre de temps, une fenêtre plus petite, et en ce qu'il est procédé à une commutation de la grande fenêtre à une fenêtre plus petite correspondant à la norme de l'émission reçue, en ce que l'apparition répétée d'impulsions de synchronisation verticale est constatée à l'intérieur de cette petite fenêtre de temps, en ce que, dans le cas d'une absence répétée d'impulsions de synchronisation verticale successives à l'intérieur de cette petite fenêtre de temps déterminée, il est procédé à une commutation à la grande fenêtre, et en ce que, en fonction de la durée de la fenêtre de temps venant d'être établie, un signal est engendré qui sert à maintenir constante l'amplitude de déviation.

2. Montage électronique selon la revendication 1, caractérisé en ce que le signal obtenu pour maintenir constante l'amplitude de déviation est disponible pour d'autres commutations du récepteur de télévision imposées par la norme.

3. Montage électronique selon la revendication 1, caractérisé en ce que la petite fenêtre de temps produite par le compteur (1) est asymétrique par rapport à la position des impulsions de synchronisation.

4. Montage électronique selon la revendication 1, caractérisé en ce que, en l'absence de signaux de télévision, le signal de silence ou de mute commute le compteur (1) sur une fréquence de sortie fixe constante.

5. Montage électronique selon la revendication 1, caractérisé en ce que la fréquence d'entrée du compteur est la fréquence de ligne.

6. Montage électronique selon la revendication 1, caractérisé en ce que le signal obtenu commute le courant fourni par la source à courant constant.

## Claims

1. Circuit arrangement for producing a control signal for the vertical output stage (4) in a television receiver with the assistance of a capacitor chargeable by a constant current source using a counter (1), whose input (C) is fed by a frequency synchronous to the line frequency, as well as an amplitude filter, from which vertical frequency pulses can be taken from, where gate circuits are connected to the counter outputs $(t_0\text{-}t_6)$ to form time windows of different width and, during the process of synchronisation, at first a large time window is opened and in the stationary, synchronised state it will be switched to a smaller time window, whereby the switching over to the smaller time window happens after repeated successions and the return switching to the large time window after repeated successive missing of vertical synchronising pulses, and the back shoulder of a time window sets back the counter (1) to zero at missing of a vertical synchronisation pulse and, at presence of a vertical synchronisation pulse, the same is setting back the counter (1) to zero, characterized in that, for the different standards of deflection frequency, there is provided a smaller time window within the large time window and that it will be switched to the smaller time window corresponding with the received standard starting from the large time window, whereby the repeated appearance of vertical synchronisation pulses within this definite smaller time window will be registered, that at repeated successive missing of vertical synchronisation pulses within this definite smaller time window it will be switched to the larger time window, and that a signal will be derived depending on the just selected time window, which serves to keep the deflection amplitude constant.

2. Circuit arrangement according to Claim 1, characterized in that the gained signal for keeping the deflection amplitude constant is at service for further switchings of the TV sets depending on standards.

3. Circuit arrangement according to Claim 1, characterized in that the smaller time windows produced by the counter (1) are generated unsymmetrically in relation to the position of the synchronisation pulses.

4. Circuit arrangement according to Claim 1, characterized in that the counter (1) is switched to a constant start frequency at the absence of TV signals using the mute signal generated in the TV sets.

5. Circuit arrangement according to Claim 1, characterized in that the counter input frequency is the line frequency.

6. Circuit arrangement according to Claim 1, characterized in that the produced signal switches over the constant current of the constant current source.

Fig.1

0 069 863

0 069 863

17  18

Fig.2

Fig.3a

Fig.3b

9